Europäisches Patentamt

European Patent Office

Office européen des brevets

(19)

(11) Publication number: **0 022 343**
**B1**

(12) **EUROPEAN PATENT SPECIFICATION**

(45) Date of publication of patent specification: **02.05.84**

(51) Int. Cl.³: **B 29 C 17/07**

(21) Application number: **80302191.4**

(22) Date of filing: **30.06.80**

(54) Blow moulding method and apparatus.

(30) Priority: **05.07.79 US 55204**

(43) Date of publication of application:
**14.01.81 Bulletin 81/2**

(45) Publication of the grant of the patent:
**02.05.84 Bulletin 84/18**

(84) Designated Contracting States:
**AT BE CH DE FR GB IT LI NL SE**

(56) References cited:
DE - A - 1 604 632
FR - A - 1 175 974
FR - A - 1 373 990
FR - A - 1 415 747
FR - A - 1 441 298
GB - A - 781 560
US - A - 2 657 431
US - A - 3 009 196
US - A - 3 371 376
US - A - 3 733 384
US - A - 4 032 278
US - A - 4 430 290

(73) Proprietor: **Schmidt Moulding Limited Elgner Castings Limited and Kovacs Mould Mfg. Limited** trading together in parnership as
**SUPREME CASTING AND TOOLING 1995 Kipling Avenue**
**Rexdale Ontario M9W 4J4 (CA)**

(72) Inventor: **Haubert, Thomas R.**
**172 Hilltop Drive**
**Holland Landing, Ontario (CA)**

(74) Representative: **Ellis, John Clifford Holgate et al,**
**MEWBURN ELLIS & CO. 2/3 Cursitor Street**
**London EC4A 1BQ (GB)**

(56) References cited:
IBM TECHNICAL DISCLOSURE BULLETIN, vol. 20, no. 8, January 1978, New York US, CESARIO: "Tubing stretcher"

## Blow moulding method and apparatus

This invention relates generally to the art of blow moulding hollow articles of plastic material, and is concerned in particular with an improved blow moulding method and apparatus.

Blow moulding is a well known technique used for manufacturing hollow plastic articles such as bottles. Typically, a tube or "parison" of plastic material in a hot, mouldable condition is positioned between two halves of a partible mould having a mould cavity of a shape appropriate to the required external shape of the article to be moulded. The mould halves are closed around the parison and pressurized air is introduced into the interior of the parison to cause it to expand and conform to the shape of the mould cavity. The mould cools the plastic material to its final rigid shape and the mould is then opened and the article removed. The parison is normally extruded through a die directly into position between the mould halves; in this case, the overall process is referred to as extrusion blow moulding.

Articles such as bottles having relatively wide cylindrical body portions and narrower necks can be blow moulded relatively easily. However, difficulties are often encountered in blow moulding articles having somewhat more unusual shapes. For example, it is difficult to successfully blow mould an article which has a relatively large diameter neck and a body portion of corrugated or other unusual shape; the body portion may be of bellows-like form so as to allow for longitudinal extensibility and compressibility of the article. In order to successfully mould the corrugations defining the bellows-like portion of the article, a relatively small diameter parison must be used. If the parison has too large a diameter, "webs" will be formed between the corrugations and the extensibility and compressibility of the bellows-like portion of the article will be lost. On the other hand, with a relatively small diameter parison it is difficult to successfully form the neck portion of the article.

In US—A—3 371 376 there is disclosed an apparatus for the production of hollow objects. An extrusion head is provided for forming elongate parisons, and below the extrusion head there is a two-part mould. Below the mould, there is a conical mandrel and gripping claws which can be displaced by the mandrel. In use, a parison is formed by the extrusion head, and the two parts of the mould are closed to sever off the parison. A blow-pipe is slidably mounted in the conical mandrel, and it is now introduced into the parison to partially inflate the parison against the sides of the mould. For wide-necked articles, gripper claws are used to open out the free end of the parison, to help bring it against the portion of the mould defining the neck. The gripper claws are driven apart by the conical mandrel, which is passed through them, until it comes into abutment with the mould. By bringing the mandrel into abutment with the mould, an excess portion of the parison left outside the mould is cleanly severed from the finished moulded article within the mould.

FR—A—1 373 900 (Otto Lackner) discloses a device for mounting a flexible plastic tube on a blowing mandrel in which the lower end of the tube is expanded by means of a plurality of pivoted levers which engage inside the lower end of the tube. As the mandrel is advanced, it causes the levers to pivot outwardly to expand the lower end of the tube so that the tube can be drawn onto the mandrel. However, a disadvantage of this arrangement is believed to be that the tube will tend to slip off the fingers as they pivot outwardly in response to upward movement of the mandrel, with consequent loss of control over the parison. Also, it is believed that it would not be possible to obtain accurate sizing of the opening in the finished product using a device of this form.

The following patents were also considered in the preparation of this application:

United States Patents Nos:
1,514,183 (Steele et al)
2,657,431 (Slaughter)
3,009,196 (Hagen)
3,080,614 (Adams)
3,164,646 (Fisher)
3,278,665 (Harrison)
3,303,249 (Strauss)
3,311,950 (Strauss)
3,430,290 (Kinslow)
3,733,384 (Gerlovich)
3,911,071 (Naumann)
4,032,278 (Kuenzig)

French Patents Nos:
1,495,618 (Mehnert)
1,175,974 (Ateliers et Forges de la Loire)
1,415,747 (AGK)
1,441,298 (B.A.S.F.)

British Patent No:
781,560 (Glenn Proprietary)

German Offenlegungsschrift:
1,604,632 (Moslo)

It is an object of the present invention to provide an improved blow moulding method and apparatus which may be used for producing articles of the general form referred to above.

According to one aspect of the invention there is provided a method of moulding a hollow plastic article having a body portion and a relatively wide neck at one end. The method involves a first step of providing a partible mould comprising mould parts which can be opened and closed and which, when closed, define a mould cavity of a shape appropriate to the required external shape of the article and extending about a generally upright longitudinal axis, the mould cavity having adjacent one end thereof, surface portions defining the neck of the article. The mould parts are opened and a relatively narrow tubular parison of a thermoplastic material in a mouldable condition is positioned between the mould parts generally on said axis. The parison has an open lower end portion from which the relatively wide neck is to be formed. A plurality of parison engaging elements are provided and are arranged to project into the open lower end portion of the parison generally parallel to the said axis. An annular housing supports a number of slide members for horizontal rectilinear sliding movement radially of the housing and the inner ends of the slide members support the parison engaging elements which project upwardly generally normally therefrom. The slide members are moved outwardly through cam means by an actuator ring which is turned about the axis of the central opening in the annular housing through a predetermined angle, thus displacing the parison engaging elements outwardly so that they expand the parison to a size approximating the final size of the neck of the article, while leaving the end of the parison unobstructed.

At this stage a mandrel is moved along the axis of the central opening of the annular housing from a retracted position to an advanced position within the parison, the mandrel being shaped to cooperate with the said surface portions of the mould cavity to form the neck of the article to the required size and shape.

The end of the parison opposite the end engaged by the said elements is closed. The mould parts are closed while maintaining the said elements clear of the mould parts. Air is introduced into the interior of the parison to cause the parison to expand and adopt the shape of the mould cavity. The parison is allowed to cool at least to a semirigid state in which it can be handled and the mould parts are opened to permit removal of the moulded article.

According to another aspect of the invention there is provided an apparatus for moulding hollow plastic articles, each having a body portion and a relatively wide neck at one end. The apparatus includes a partible mould comprising mould parts movable between open and closed positions and defining in said closed position a mould cavity of a shape appropriate to the required external shape of the article and extending about a generally upright longitudinal axis. The mould cavity has adjacent one end thereof surface portions for defining the neck of the article. When in said open position, the mould parts are capable of receiving therebetween a relatively narrow mouldable tubular parison having an open lower end portion from which the relatively wide neck is to be formed.

The apparatus further includes means mechanically engagable with the open lower end portion of the parison and adapted to expand said portion, said means comprising a plurality of parison engaging elements arranged to project into the open lower end portion of the parison generally parallel to said longitudinal axis.

A plurality of slide elements are provided, corresponding in number to the parison engaging elements, an inner end of each slide member supporting one of said elements with each element projecting upwardly from the respective slide member generally normally therefrom. The slide members are supported by an annular housing having a central opening, and can slide horizontally radially of the housing along rectilinear paths normal to the said longitudinal axis between first positions in which the elements are disposed closely adjacent to each other so that a parison can be positioned thereover, and second positions in which the elements have been displaced radially outwards to expand the parison to a size approximating the required final size of the neck of the article.

Means for moving the elements between said first and second positions comprises an actuator ring supported by the housing for turning movement about the axis of the central opening of the housing, actuator means for turning said ring through a predetermined angle and cam means coupling the actuator ring and slide members and arranged to cause radial sliding movement of the members in response to turning movement of the ring.

The apparatus also includes a mandrel movable with respect to said elements between a retracted position clear of the mould parts and an advanced position within the parison. The mandrel is shaped to co-operate with the surface portions of the mould cavity when the mould is closed to form the neck of the article to the required size and shape. Means is provided for closing the end of the parison opposite said one end and the apparatus further includes means for introducing air into the interior of the parison to cause the parison to expand and conform to the shape of the mould cavity.

In order that the invention may be more clearly understood, reference will now be made to the accompanying drawings which illustrate a preferred embodiment of the invention by way of example, and in which:

Figure 1 is a side elevation, partly in section, of a moulding apparatus according to the invention, having mould parts shown in the open condition;

Figure 2 is a view similar to Figure 1 but with the mould parts shown closed;

Figure 3 is a plan view corresponding to Figure 2 but with the mould parts omitted;

Figure 4 is a view from below of the mould parts seen in Figures 1 and 2 and illustrates movable inserts of said mould parts, the inserts being shown in advanced positions;

Figure 5 is a view similar to Figure 4 showing the inserts retracted; and,

Figure 6 is a sectional view on line VI—VI of Figure 4.

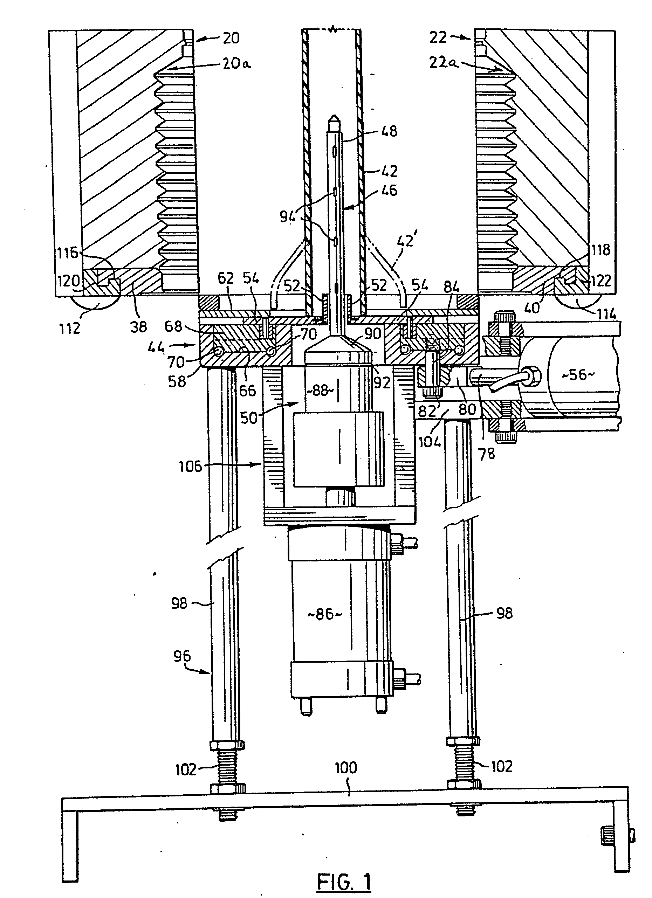

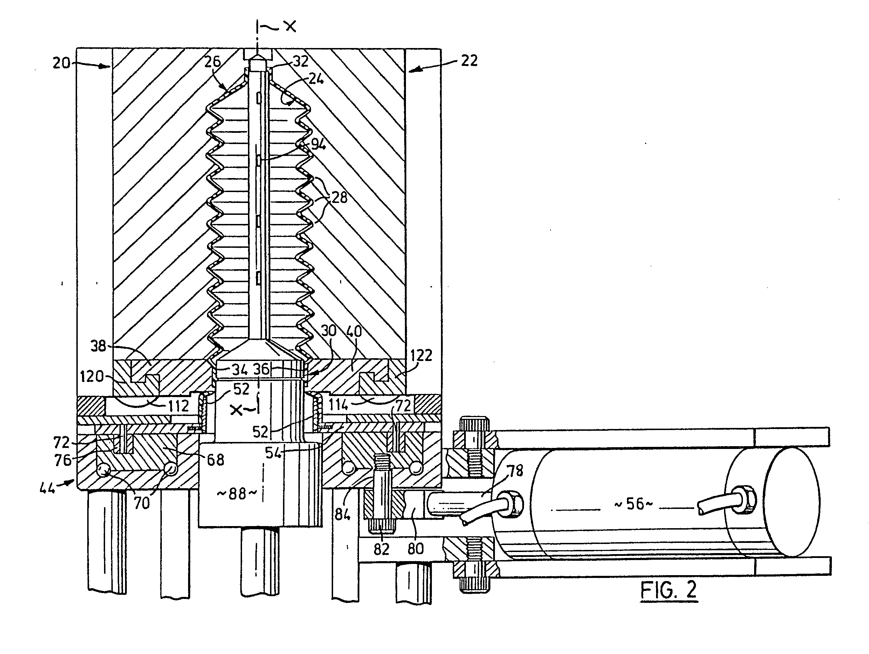

Referring first to Figures 1 and 2, the blow moulding apparatus includes a partible mould comprising first and second mould parts denoted 20 and 22 respectively. In this particular embodiment, each part forms one half of the mould and the mould halves are movable between the open position in which they are shown in Figure 1 and the closed position of Figure 2. For clarity of illustration, the drawings do not show supports for the mould halves or the means employed to move them between the open and closed positions. These components are entirely conventional and will be well known to persons skilled in the blow moulding art.

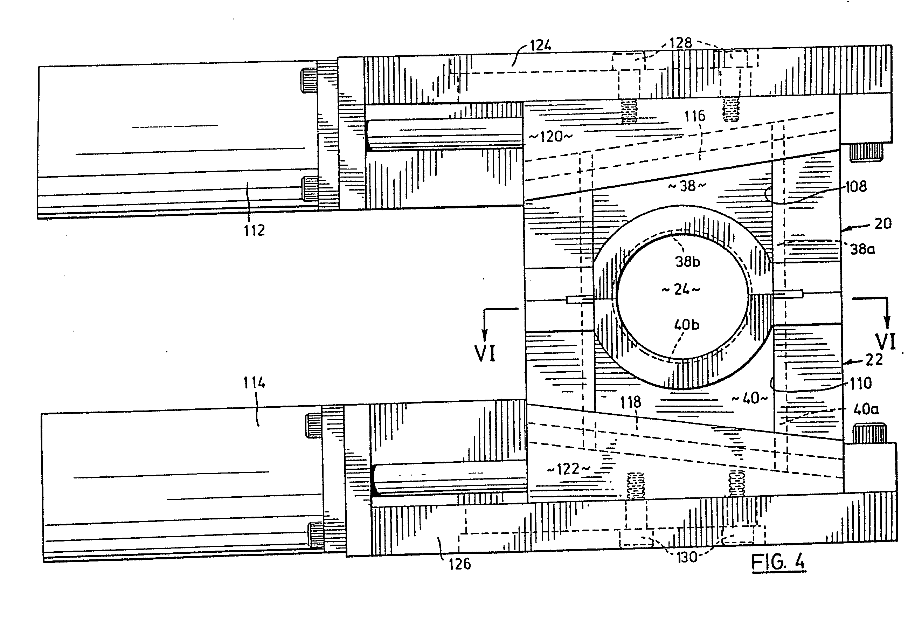

The mould halves are machined to define specially shaped recesses 20a and 22a respectively which co-operate when the mould is closed to define a mould cavity which is generally indicated by reference numeral 24 in Figure 2 and which extends about a longitudinal axis X—X. The mould cavity is of a shape appropriate to the required external shape of the article to be moulded. In this case, the article is visible in longitudinal section at 26 in Figure 2 and includes a bellows-like body portion 28 having a relatively wide neck 30 at one end and a relatively narrow opening defined by a sleeve like end portion 32 at its opposite end. Mould cavity 24 is shaped to define the corrugations of body portion 28 and includes surface portions 34 and 36 which form the neck 30 of the article during moulding. In this particular embodiment, these surface portions are defined by movable mould inserts 38 and 40 which are more particularly illustrated in Figures 4, 5 and 6 and which will be described later in connection with those views.

Referring back to Figure 1, the article described above is moulded from a tubular parison 42 of a thermoplastic material. The parison is shown in the position it occupies immediately before the mould halves 20 and 22 are closed prior to commencement of the actual blow moulding operation. At this time, the parison will be in a mouldable condition; that is, the plastic material of which the parison is made will be hot and in a form in which it can be relatively easily deformed by the application of internal air pressure. Normally, the parison will in fact be formed by a section severed transversely from a tubular extrusion fed continuously or intermittently to the moulding apparatus from an extruder as is conventional in the blow moulding art. In Figure 1, the parison is shown supported from the extruder.

It will be appreciated from a comparison of Figures 1 and 2 that parison 42 is of relatively small diameter and must be expanded significantly to form article 26. As discussed previously, the diameter of the parison must be limited in order to avoid the formation of "webs" between the corrugations which would tend to inhibit the longitudinal extensibility and compressibility of the article. However, the fact that the parison is small makes it difficult to form the relatively large diameter neck 30 of the article. For this reason, the apparatus provided by the invention includes means (hereinafter referred to as a "stretcher mechanism") for mechanically engaging and expanding the lower end portion of the parison. The mechanism is generally indicated by the reference numeral 44 in Figures 1, 2 and 3, and will be described in detail with reference to those views.

Before referring to the stretcher mechanism, however, it will be convenient to identify a mandrel assembly 46 which appears in the center of the stretcher mechanism as seen in Figures 1 and 2. Mandrel assembly 46 includes a so-called "blow pin" 48 through which pressurized air is introduced into the interior of the parison during moulding, and a body portion 50 from which pin 48 projects and which co-operates with the mould parts 20 and 22 to form the neck of the moulded article, all as will be described later.

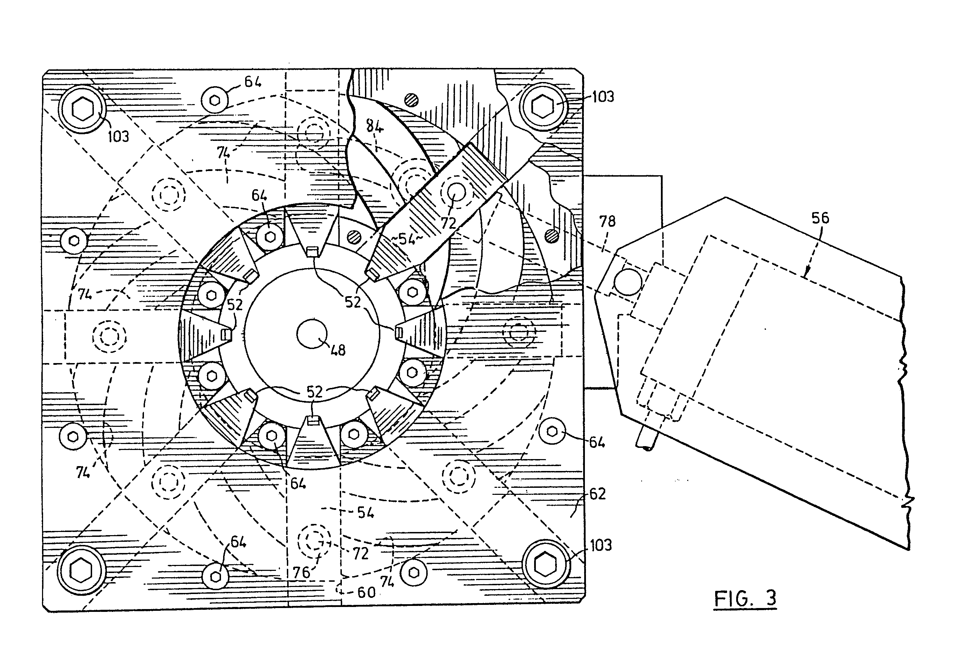

Stretcher mechanism 44 includes a plurality of parison engaging "fingers" arranged in an annular series around the mandrel blow pin 48 adjacent the lower end of the mould. Two of these fingers are visible at 52 in Figures 1 and 2; however, by reference to Figure 3, will be seen that eight such fingers are in fact provided and are spaced equally about the blow pin. Each finger projects upwardly from a horizontally movable slide 54 parallel to the longitudinal axis of mould cavity 24. The slides 54 are movable simultaneously to move the fingers between the normal rest positions in which they are shown in Figure 1, in which the fingers 52 are disposed closely adjacent to the blow pin 48 (and within the lower end of parison 52) and retracted positions as shown in Figure 2, in which the fingers have been moved outwardly to expand the lower end portion of the parison generally as indicated at 42' in Figure 1. It will be noted that the fingers 52 move radially with respect to the mould cavity axis X—X along the rectilinear paths which extend normal to said axis and that the fingers remain parallel to axis X—X at all times.

Movement of the fingers between their rest positions and retracted (parison expanding) positions is controlled by a pneumatic cylinder and ram device generally denoted 56. The slides 54 which carry the fingers 52 are mounted in a housing 58 for longitudinal sliding movement in directions radially of the axis of blow pin 48. Thus, referring to Figure 3, each slide 54 is received in a radial groove or slideway 60 in a cover plate 62 secured by bolts 64 to housing 58 so as to retain the slides in their respective grooves. As seen in Figure 3, the slides are substantially in their fully retracted positions.

Below the slides, housing 58 is shaped to define an annular recess 66 (Figures 1 and 2) which receives an annular member 68 forming an actuator ring for the fingers 52. Ring 68 is mounted for free turning movement in recess 66 by way of ballbearings 70. Each of the slides 54 is fitted with a pin 72 which depends from the slide and is received in an arcuate groove 74 (Figure 3) in the upper face of ring 68. A bearing sleeve 76 is fitted around the lower portion of each pin 72 within groove 74. Similar groove and pin arrangements are provided for each of the slides 54. The grooves 74 in effect define cam tracks and are specially shaped so that angular movement of ring 68 causes all of the slides 54 to move radially in or out depending on the direction in which the ring is turned. For example, if ring 68 is turned in the counterclockwise direction as seen in Figure 3, the cam tracks 74 will all act on the associated bearing sleeves 76 and pins 72 to cause all slides 54 and associated fingers 52 to move inwardly towards the blow pin 48. Conversely, if the fingers 52 are in the rest (advanced) positions adjacent blow pin 48 and ring 68 is turned in the clockwise direction, the fingers will all simultaneously move outwards. The extent of this movement in either case is determined by the length of the cam tracks 74 and the angular extent through which ring 68 is turned. This angular movement of the ring is effected by the cylinder and ram device 56.

Referring back to Figures 1 and 2, the ram of device 56 is indicated at 78 and has a coupling 80 at its outer end. A link pin 82 extends vertically upwardly from coupling 80 through an arcuate slot 84 (see Figure 3) in the bottom wall of housing 58 and is secured to ring 68 at its upper end. Thus, as ram 78 is extended and retracted, ring 68 will move through discrete angular amounts. The amount of this angular movement will be determined by the stroke of ram 78, which will be selected as appropriate to the required movement of the fingers 52.

Figure 1 illustrates how the slides 54 which support the fingers 52 also serve to define the position of the parison 42 prior to commencement of the blow moulding operation. Thus, the parison should be disposed so that a lower end portion thereof extends beyond the lower ends of the mould halves 20 and 22. This end portion of the parison is engaged by the fingers 52 of the stretcher mechanism 44 and is expanded thereby to an extent sufficient to cause the portion of the parison which is to form the neck 30 of the article to expand to a size approximating the required final size of the neck. Preferably, the parison should not be expanded beyond its required final size since otherwise there may be a tendency for the parison to become trapped or crimped when the mould halves close.

Expansion of the lower end portion of the parison also allows the body portion 50 of the mandrel assembly 46 to move upwardly into the parison as will be described. Thus, assembly 46 is axially movable from the retracted position in which is shown in Figure 1 to the advanced position of Figure 2. This movement is effected by a pneumatic cylinder and ram device 86 which is mounted in a vertical position below the mandrel assembly and the ram of which is coupled to said assembly. Thus, by extending the ram of device 86 the mandrel assembly is moved up into its advanced position.

It will be seen that the body portion 50 of the mandrel assembly 46 includes an inner part 88 which is of cylindrical shape and which has a conical top 90. Part 88 is shaped to co-operate with the surface portions 34 and 36 of mould cavity 24 to shape and define the neck 30 of the moulded article 26. Thus, the part 88 is dimensioned so that its external diameter is less than the diameter defined by the surface portions 34 and 36 by an amount equal to the wall thickness of neck 30. Accordingly, the neck 30 will in effect be formed by compression between mandrel part 88 and the surfaces 34 and 36 rather than by blow moulding as such. Part 88 includes an annular groove 92 adjacent its upper end for defining a corresponding inwardly protuberant rib around neck 30 as is required in the finished article.

Figure 2 shows the mandrel assembly 46 in its fully advanced position and it will be seen that the upper end portion of the blow pin 48 co-operates with the mould halves 20 and 22 to close the upper end of the parison and form the sleeve-like end portion 32 of article 26. Openings such as those indicated at 94 are provided in blow pin 48 for introducing air into the parison during blow moulding; thus the blow pin is coupled to a suitable air supply (not shown) as is conventional in the blow moulding art.

Reference numeral 96 in Figure 1 indicates supporting structure for the stretcher mechanism 44 and the mandrel assembly 46. Four support columns, two of which are visible at 98 extend upwardly from a base plate 100 and are provided with screw adjusters 102 at their lower ends. At their upper ends, the four support columns are attached to the actuator housing 58 by four bolts 103 (Figure 3). The device 86 for actuating the mandrel assembly 46 is carried by brackets 106 depending from housing 58.

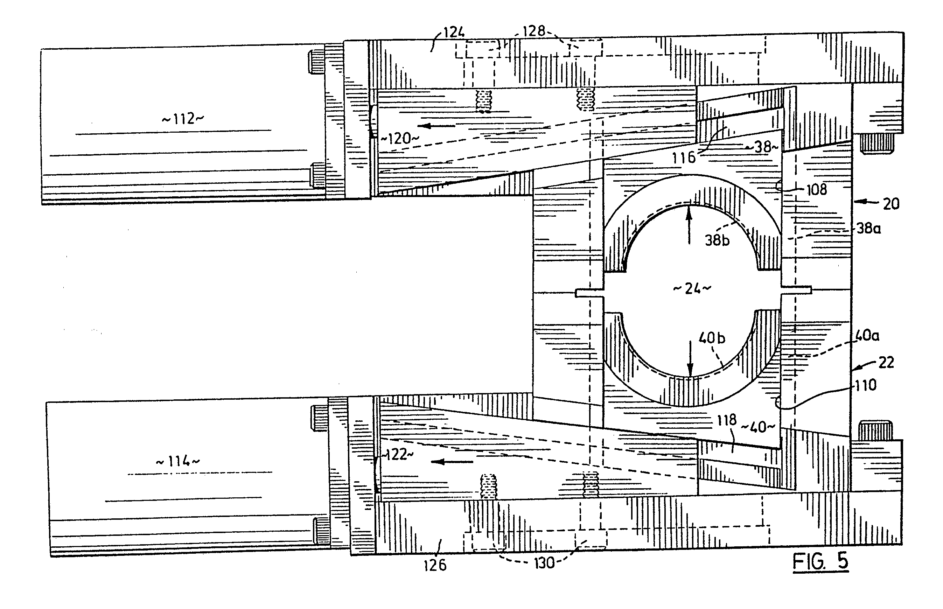

Figures 4, 5 and 6 illustrate the movable inserts 38 and 40 of the mould halves 20 and 22. Figures 4 and 5 show the mould halves in their closed positions as seen from below, but turned through 90° compared with Figures 1 and 2; thus, the joint line between the mould halves 20 and 22 would lie on section line VI—VI of Figure 4. Before referring in detail to these views, it may be helpful to briefly explain the purpose of the movable inserts 38 and 40. It will be recalled that an annular groove 92 (Figure 2) is provided in the part 88 of mandrel assembly 46 which assists in forming the neck 30 of the moulded article, in order to provide a protuberant rib around the inner surface of neck 30. If the mandrel assembly 46 were withdrawn downwardly from the position in which it is shown in Figure 2, with the mould tightly closed, the result would be to shear off the moulded rib on neck 30. The inserts 38 and 40 are designed to be retractable away from the mandrel to free the neck 30 of the moulded article and allow it to flex sufficiently to permit the mandrel to be withdrawn without damaging the moulded rib.

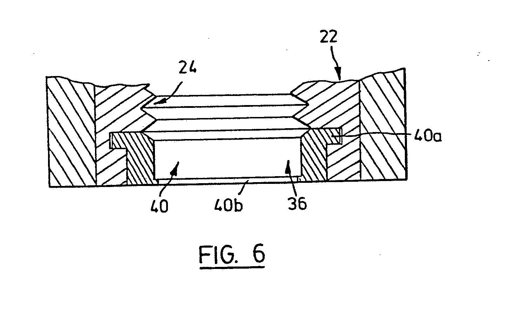

As seen in Figures 4 and 5, the mould halves 20 and 22 are provided in their bottom faces with respective parallel sided recesses 108 and 110 which receive the respective inserts 38 and 40. The recesses and associated inserts are shaped so that the inserts can slide towards and away from one another from normal moulding positions in which they are shown in Figure 4 to retracted positions as shown in Figure 5. Figure 6 illustrates the shape of insert 40, which is also representative of insert 38. Thus, it will be seen that insert 40 is formed with a projecting flange 40a which is received in a complementary undercut portion of the recess 110 in mould half 22 so as to permit this sliding movement of the insert. The inserts have respective inwardly projecting peripheral edges 38b and 40b at their lower ends which co-operate with mandrel part 88 to cut off the surplus lower end portion of the parison when the mould halves are closed, as best seen in Figure 2.

Movement of the two inserts between their advanced and retracted positions is effected under the control of respective pneumatic cylinder and ram devices 112 and 114 which are horizontally mounted behind the mould parts as seen in Figures 1 and 2. With continued reference to those views, it will be seen that the inserts 38 and 40 are shaped at their outer sides to define respective undercut slideways 116 and 118 which slidably interlock with assocaited actuator slides 120 and 122. These actuator slides are visible in plan in Figures 4 and 5 and it will be seen that they are coupled to the respective cylinder and ram devices 112 and 114. It will also be seen from those views that the slides 120 and 122, are generally wedge shaped and that the slideways 116 and 118 are inclined with respect to the joint line between the two mould halves 20 and 22. Thus, longitudinal movement of the respective slides 120 and 122 under the control of their associated cylinder and ram devices 112 and 114 will cause corresponding radial movement of the inserts 38 and 40 with respect to the mould cavity 24. For example, by retracting the rams of devices 112 and 114 and the associated slides 120 and 122 from the positions in which they are shown in Figure 4, the inserts 38 and 40 will be drawn radially outwardly to their retracted positions as shown in Figure 5. Conversely, by extending the rams of devices 112 and 114, the inserts 38 and 40 will be returned to their normal moulding positions.

The actuator slides 120 and 122 move back and forth on support brackets 124 and 126 which are attached to the respective mould halves 20 and 22 and to which the cylinder and ram devices 112 and 114 are also attached. Each slide is held against the associated support bracket by a pair of bolts which extend through a slot in the bracket permitting movement of the slide. The bolts for slide 120 are denoted 128 and those for slide 122 are denoted 130.

Referring back to Figure 1 and 2, a typical moulding sequence will now be described.

With the mould halves 20 and 22 in their open positions and mandrel assembly 46 retracted, the parison 42 is positioned over the exposed portion of the mandrel blow pin 48. Typically, the parison will be extruded into this position and supported at its upper end by the extrusion device. At this time, the cylinder and ram devices 112 and 114 associated with the mould inserts 38 and 40 will be actuated so that the inserts will be in their forward (moulding) positions and the fingers 52 will be in their normal rest positions adjacent blow pin 48. After the parison has reached the position shown in Figure 1, the fingers 52 will be moved outwardly by actuating cylinder and ram device 56 to expand the lower end portion of the parison. Next, the mandrel assembly will move up into the position in which is shown in Figure 2 inside the parison. The mould halves then close onto the mandrel assembly, trapping the parison.

Air pressure is now introduced into the parison through the mandrel blow pin 48. This expands the parison into contact with the mould halves and causes it to conform to the shape of the mould cavity. At the same time, the parison cools into a relatively rigid state. Air pressure is then released and the rams of the cylinder and ram devices 112 and 114 are retracted to retract the mould inserts 38 and 40 and relieve external pressure on the neck 30 of the moulded article.

Next, the mandrel assembly 46 is retracted to the position shown in Figure 1 and the mould halves open leaving the moulded article supported by the fingers 52 and slides 54. Finally, the moulded article is removed either manually or by an air cylinder actuated "wiper" mechanism in manner known per se. The inserts 38 and 40 are then returned to their forward positions ready for the next operation.

It is to be noted that the method and apparatus disclosed herein may be used for moulding articles other than the article specifically referred to above (a protective belows for a rank and pinion vehicle steering system). An example of another article which may be manufactured is a protective cover for vehicle front wheel drive systems. There is no limitation to articles of circular cross-section although special arrangements will obviously have to be provided for stretching the parison where the article is to be of non-circular shape.

The movable mould inserts 38 and 40 although desirable in the present instance, are not essential. For example, there would be no need for such inserts if the neck of the moulded article were plain.

## Claims

1. A method of moulding a hollow plastic article having a body portion and a relatively wide neck at one end, the method comprising the steps of;

providing a partible mould comprising mould parts which can be opened and closed and which, when closed, define a mould cavity of a shape appropriate to the required external shape of the article and extending about a generally upright longitudinal axis (X—X), said mould cavity having adjacent one end thereof, surface portions for defining said neck of the article;

opening said mould parts;

positioning between said mould parts generally on said axis a relatively narrow tubular parison of a thermoplastic material in a mouldable condition, said parison including an open lower end portion from which said relatively wide neck is to be formed;

providing a plurality of parison engaging elements;

engaging said open lower end portion of the parison with said parison engaging elements and moving all of the said elements radially outwardly with respect to said longitudinal mould axis (X—X) to expand the open lower end portion at the parison;

providing a mandrel movable between a retracted position and an advanced position;

moving said mandrel from its retracted position clear of the mould parts to its advanced position within the parison;

closing the end of the parison opposite said one end;

closing the mould parts while maintaining said elements clear of the mould parts;

introducing air into the interior of the parison to cause the parison to expand and adopt the shape of the mould cavity;

allowing the parison to cool at least to a semirigid sate in which it can be handled; and,

opening the mould parts to permit removal of the moulded article;

characterised in that means mechanically engageable with said open lower end of the parison is provided, said means comprising: said plurality of parison engaging elements arranged to project into said open lower end portion of the parison generally parallel to said longitudinal axis (X—X); a plurality of slide members corresponding to said plurality of parison engaging elements, an inner end of each slide member supporting one of said elements with each element projecting upwardly from the respective slide member, generally normally therefrom; an annular housing defining a central opening and supporting said slide members for horizontal sliding movement radially of the housing; and means for moving the elements which comprises an actuator ring supported by said annular housing for turning movement about an axis of said central opening defined by the annular housing, actuator means for turning said ring through a predetermined angle, and cam means coupling said actuator ring and said slide members and arranged to cause radial sliding movement of the members in response to turning movement of the ring, whereby the open lower end portion of the parison is expanded by moving the slide members radially outwards along rectilinear paths disposed normal to said longitudinal axis (X—X) from first positions in which the elements are disposed closely adjacent one another to permit a parison to be positioned over said elements to second positions in which the elements have been displaced radially outwards to expand the parison to a size approximating the required final size of the neck of the article;

and further characterised in that the mandrel is movable through the central opening of the annular housing and, after expansion of the open lower end portion of the parison, is moved from its retracted position to its advanced position so that, when the mould parts are closed, the neck of the article is formed between the mandrel and the mould parts.

2. A method as claimed in claim 1, wherein said mandrel defines an external annular groove for forming an inwardly protuberant rib on the neck of the moulded article, and wherein the method comprises the further steps of:

withdrawing the mandrel from the parison after the parison has been expanded by air pressure; and,

relieving the pressure between said surface portions of the mould parts and the mandrel after the parison has been expanded but before withdrawing the mandrel, to permit the moulded article to flex and allow disengagement of the moulded rib from said groove in the mandrel as the mandrel is withdrawn.

3. A method as claimed in claim 1 or claim 2 comprising the further step of severing from the remainder of the parison the open lower end portion which was engaged by said elements by providing on said mould parts inwardly projecting edge portions arranged to co-operate with the mandrel to sever said open lower end portion from the parison.

4. A method as claimed in claim 1, claim 2 or claim 3, wherein said step of closing the other end of the parison opposite said one end is performed by providing on said mandrel, an element which extends to the end of said mould cavity opposite said one end, and by providing one said mould parts surface portions which co-operate with said element on the mandrel to close the other end of the parison.

5. A method as claimed in claim 4, wherein said element on the mandrel comprises a blow-tube, and wherein said step of introducing air into the interior of the parison is performed by causing air to flow through said blow-tube.

6. Apparatus for moulding hollow plastic articles, each having a body portion and a relatively wide neck at one end, the apparatus comprising: a partible mould comprising mould parts movable between open and closed positions and defining in said closed position a mould cavity of a shape appropriate to the required external shape of the article and extending about a generally upright longitudinal axis (X—X), said mould cavity having adjacent one end thereof surface portions for defining said neck of the article, said mould parts in said open position being capable of receiving therebetween a relatively narrow mouldable tubular parison having an open lower end portion from which said relatively wide neck is to be formed;

a mandrel movable between a retracted position clear of the mould parts and an advanced position within the parison;

means for closing the upper end of the parison opposite said open lower end portion;

means for introducing air into the interior of the parison to cause the parison to expand whereby the parison adopts the shape of the mould cavity; and

means mechanically engagable with said open lower end portion of the parison and adapted to expand said open lower end portion, said means including a plurality of parison engaging elements;

characterised in that said means mechanically engageable with said open lower end of the parison comprises: said plurality of parison engaging elements arranged to project into said open lower end portion of the parison generally parallel to said longitudinal axis (X—X); a plurality of slide members corresponding to said plurality of parison engaging elements, an inner end of each slide member supporting one of said elements with each element projecting upwardly from the respective slide member, generally normally thereform; an an annular housing defining a central opening and supporting said slide members for horizontal sliding movement radially of the housing along rectilinear paths disposed normal to said longitudinal axis (X—X) between first positions in which the elements are disposed closely adjacent one another to permit a parison to be positioned over said elements, and second positions in which the elements have been displaced radially outwards to expand the parison to a size approximating the required final size of the neck of the article; and means for moving the elements between said first and second positions, which means comprises an actuator ring supported by said housing for turning movement about an axis of said central opening defined by the annular housing, actuator means for turning said ring through a predetermined angle, and cam means coupling said actuator ring and said slide members and arranged to cause radial sliding movement of the members in response to turning movement of the ring; and further

characterised in that the mandrel is movable through the central opening of the annular housing with respect to said elements between the retracted position clear of said mould parts and the advanced position within the parison, said mandrel being shaped to co-operate in the advanced position with said surface portions of the mould cavity when the mould is closed to form the neck of the article to the required size and shape.

7. Apparatus as claimed in claim 6, wherein said slide members define upper surfaces for contact by the lower end of a parison in position between said mould parts, whereby said members provide means for positioning the parison with an open lower end portion thereof extending beyond said one end of the mould cavity.

8. Apparatus as claimed in claim 6 or claim 7 wherein said mandrel comprises a mandrel assembly including a blow pin which projects upwardly from said mandrel and defines said means for introducing air into the interior of the parison, said pin extending to the end of said mould cavity opposite said one end, and said mould parts including surface portions cooperating with said pin and defining therewith said means for closing the upper end of the parison.

9. Apparatus as claimed in claim 6, claim 7 or claim 8 further comprising a plurality of mould inserts carried each by one of said mould parts and defining said surface portions of the mould cavity, each said insert being movable between a forward normal moulding position in co-operation with said mandrel, and a retracted position for relieving pressure between said mould parts and said mandrel; and means for moving the inserts between their moulding positions and retracted positions.

10. Apparatus as claimed in claim 9, wherein each insert includes an inwardly projecting edge portion which co-operates with the mandrel to sever from the parison an end part thereof extending beyond one end of the mould cavity when the mould parts are closed with said inserts in their forward moulding positions.

11. Apparatus as claimed in claim 9 or claim 10, wherein said mould parts comprise two mould halves each including one of said inserts, said inserts being movable towards and away from one another generally radially in the mould cavity, and wherein said means for moving the inserts between their forward positions and retracted positions comprise, in association with each insert, an actuator slide movable in a direction generally normal to said radial direction; actuator means for moving said slide; and a cooperating inclined slide way between each actuator slide and a respective insert arranged to cause radial movement of the insert in response to longitudinal movement of the actuator slide.

**Patentansprüche**

1. Verfahren zum Formen eines hohlen Kunststoffgegenstandes mit einem Körperbereich und einem verhältnismäßig weiten Hals an einem Ende, gekennzeichnet durch folgende Schritte:

— Schaffung einer teilbaren Form, welche Formteil aufweist, die geöffnet und geschlossen werden können und die im geschlossenen Zustand einen Formraum mit einer Form bildet, die der erforderlichen Außenform des Gegenstandes entspricht und sich um eine im allgemeinen aufrechte Längsachse (X—X) erstreckt, wobei der Formraum an einem Ende Flächenteil besitzt, um den Hals des Gegenstandes zu bilden;
— Öffnen der Formteile;
— Einbringen eines verhältnismäßig schmaleren rohrförmigen Külbels aus thermoplastischem Material in formbarem Zustand zwischen die Formteile im allgemeinen auf der Achse, wobei der Külbel einen offenen unteren Endabschnitt aufweist, aus dem der verhältnismäßig weite Hals geformt werden soll;
— Vorsehen einer Anzahl von Külbeleinwirkteilen;
— Eingreifen des offenen, unteren Endabschnitts des Külbels in das Külbeleingreifteil und Bewegen des gesamten Teils radial nach außen in Bezug auf die Längsachse (X—X) der Form, um den offenen, unteren Endabschnitt des Külbels aufzuweiten;
— Vorsehen eines Dorns, der zwischen einer zurückgezogenen Stellung und einer vorgeschobenen Stellung bewegbar ist;
— Bewegung des Dorns aus seiner zurückgezogenen Stellung, in welcher er frei von den Formteilen ist, in seine vorgeschobene Stellung in den Külbel;
— Verschließen des Endes des Külbels gegenüber dem einen Ende;
— Schließen der Formteil bei gleicheitiger Freihaltung der Teile von den Formteilen;

— Einleiten von Luft in das Innere des Külbels, um diesen aufzuweiten und die Form des Formraums anzunehmen;
— Abkühlen des Külbels auf wenigstens einen halbsteifen Zustand, in der er handhabbar ist; und
— Öffnen der Formteile, um den geformten Gegenstand entnehmen zum können;

dadurch gekennzeichnet, daß eine mit dem offenen, unteren Ende des Külbels mechanisch in Eingriff bringbare Einrichtung vorgesehen ist, bei der die Anzahl der Külbeleinwirkteile so angeordnet ist, daß sie in den offenen, unteren Endabschnitt des Külbels im allgemeinen parallel zu der Längsachse (X—X) ragen; eine Anzahl von Gleitelemente, die der Anzahl der Külbeleingriffteile entsprechen, wobei ein inneres Ende jedes Gleitelements eines der Teile trägt und wobei jedes Teil von dem zugehörigen Gleitelement hochsteht, und zwar im allgemeinen normal dazu; ein ringförmiges Gehäuse, welches eine Zentralöffnung bildet und die Gleitelemente zur horizontalen Gleitbewegung radial zum Gehäuse trägt; und Einrichtungen zur Bewegung der Teile, welche einen Betätigungsring aufweisen, der von dem ringförmigen Gehäuse getragen wird und zur Drehbewegung um die Achse der Zentralöffnung dient, welche von dem ringförmigen Gehäuse gebildet ist, mit einer Betätigungseinrichtung zum Drehen des Rings über einen vorgegebenen Winkel und mit einer Nockeneinrichtung, welche den Betätigungsring und die Gleitelemente koppelt und so angeordnet ist, daß eine radiale Gleitbewegung der Elemente in Abhängigkeit von der Drehbewegung des Rings verursacht wird, wodurch der offene, untere Endabschnitt des Külbels durch radiale Auswärtsbewegung der Gleitelemente entlang eines geradlinigen Pfades aufgeweitet wird, der senkrecht zu der Länsachse (X—X) aus ersten Positionen verläuft, in dene die Teile nahe aneinanderliegen, um einen Külbel über diese Teile zu positionieren, zu zweiten Positionen, in denen die Teile radial nach außen verschoben sind, um den Külbel auf eine Größe aufzuweiten, die der erforderlichen Endgröße des Halses des Gegenstandes angenähert ist; und ferner dadurch gekennzeichnet, daß der Dorn durch die Zentralöffnung des ringförmigen Gehäuses schiebbar ist und nach Ausdehnung des offenen, unteren Endabschnitts des Külbels aus seiner zurückgezogenen Position in seine vorgeschobene Position derart bewegt wird, daß bei geschlossenen Formteilen der Hals des Gegenstandes zwischen dem Dorn und den Formteilen geformt wird.

2. Verfahren nach Anspruch 1, dadurch gekennzeichnet, daß der Dorn eine äußere Ringnut zur Formung einer nach innen vorstehenden Rippe an dem Hals des geformten Gegenstandes bildet und daß das Verfahren die weiteren Schritte aufweist:

— Herausziehen des Dorns aus dem Külbel nachdem der Külbel durch Druckluft aufgeweitete wurde; und
— Wegnehmen des Drucks zwischen den Flächenteilen der Formteile und dem Dorn nach dem Aufweiten des Külbels, jedoch vor dem Herausziehen des Dorns, um zuzulassen, daß sich der geformte Gegenstand biegt und eine Lösung der geformten Rippe aus der Nut in dem Dorn erfolgt, wenn der Dorn zurückgezogen wird.

3. Verfahren nach Anspruch 1 oder 2, gekennzeichnet durch den weiteren Schritt des Abtrennens des offenen, unteren Endabschnitts des Külbels von dessen Rest, welcher mit den Teilen in Eingriff stand, indem an den Formteilen nach innen vorstehende Kantenbereiche vorgesehen werden, die so angeordnet sind, daß sie mit dem Dorn zusammenarbeiten, um den offenen, unteren Endabschnitt von dem Külbel abzutrennen.

4. Verfahren nach Anspruch 1, 2 or 3, dadurch gekennzeichnet, daß der Schritt des Verschließens des anderen Endes des Külbels, welches dem einen Ende gegenüberliegt, dadurch vorgenommen wird, indem an dem Dorn ein Element vorgesehen wird, welches sich zu dem Ende des Formraums gegenüber dem einen Ende erstreckt, und indem an den Formteilen Oberfläckenabschnitte vorgesehen werden, welche mit dem Element auf dem Dorn zusammenwirken, um das andere Ende des Külbels zur schließen.

5. Verfahren nach Anspruch 4, dadurch gekennzeichnet, daß das Element auf dem Dorn ein Blasrohr aufweist, und daß der Schritt des Einleitens von Luft in das Innere des Külbels derart durchgeführt wird, indem Luft durch das Blasrohr eingeleitet wird.

6. Vorrichtung zum Formen von hohlen Kunststoffgegenständen, die alle einen Körperabschnitt und an einem Ende einen verhältnismäßig weiten Hals aufweisen, wobei die Vorrichtung aufweist: eine teilbare Form mit Formteilen, die zwischen offenen und geschlossenen Stellungen bewegbar sind und in der geschlossenen Stellung einen Formraum mit einer Form bilden, die der erforderlichen Außenform des Gegenstandes entspricht und der sich entlang einer im allgemeinen hochstehenden Längsachse (X—X) erstreckt, wobei der Formraum an seinem einen Ende Oberflächenabschnitte zur Bildung des Halses des Gegenstandes aufweist, während die Formteile in der offenen Stellung in der Lage sind, zwischen sich einen verhältnismäßig schmalen, formbaren, rohreförmigen Külbel aufzunehmen, der einen offenen, unteren Endab-schnitt aufweist, aus welchem der verhältnismäßig weite Hals geformt werden soll;

— einen Dorn, der zwischen einer zurückgezogenen Position frei von den Formteilen und einer vorgeschobenen Position in dem Külbel bewegbar ist;
— Einrichtungen zum Schließen des oberen Endes des Külbels, welches dem offenen, unteren Endabschnitt gegenüber liegt;
— Einrichtungen zum Einleiten von Luft in das Innere des Külbels, umd eine Aufweitung des Külbels zu verursachen, worduch der Külbel die Form des Formraums annimmt; und
— Einrichtungen, welche mit dem offenen, unteren Endabschnitt des Külbels mechanisch in Eingriff bringbar sind und welche so ausgestaltet sind, daß sie den offenen, unteren Endabschnitt aufweiten, wobei die Einrichtungen eine Anzahl von Külbeleingriffsteilen umfaßt;

dadurch gekennzeichnet, daß die mechanisch mit dem offenen, unteren Ende des Külbels in Eingriff bringbare Einrichtung aufweist: die Anzahl der Külbeleinwirkteile ist so angeordnet, daß sie in den offenen, unteren Endabschnitt des Külbels im allgemeinen parallel zu der Längsachse (X—X) ragen; eine Anzahl von Gleitelementen, die der Anzahl der Külbeleingriffteile entspricht, wobei ein inneres Ende jedes Gleitelements eines der Teile trägt und wobei jedes Teil von dem zugehörigen Gleitelement hochsteht, und zwar im allgemeinen normal dazu; ein ringförmiges Gehäuse, welches eine Zentralöffnung bildet und die Gleitelemente zur horizontalen Gleitbewegung radial zum Gehäuse entlang eines geradlinigen Weges trägt, der normal zu der Längsachse (X—X) liegt zwischen ersten Positionen, in denen die Teile eng aneinanderliegen, um ein Darübersetzen des Külbels über die Teile zu gestatten, und zweiten Positionen verläuft, in denen die Elemente radial nach außen verschoben sind, um den Külbel auf eine Größe aufzuweiten, die der erforderlichen Endgröße des Halses des Gegenstandes entspricht; und einer Einrichtung zur Bewegung der Teile zwischen den ersten und zweiten Positionen, welche einen Betätigungsring aufweist, der von dem ringförmigen Gehäuse getragen wird und zur Drehbewegung um eine Achse der Zentralöffnung dient, welche von dem ringförmigen Gehäuse gebildet ist, mit einer Betätigungseinrichtung zum Drehen des Rings über einen vorgegebenen Winkel und mit einer Nockeneinrichtung, welche den Betätigungsring und die Gleitelemente koppelt und so angeordnet ist, daß eine radiale Gleitbewegung der Element in Abhängigkeit von der Drehbewegung des Rings verursacht wird, und ferner dadurch gekennzeichnet, daß der Dorn durch die Zentralöffnung des ringförmigen Gehäuses in bezug auf die Teile zwischen der zurückgezogenen Position frei von den Formteilen und der vorgeschobenen Position in dem Külbel verschiebbar ist, und daß der Dorn so geformt ist, daß er in der vorgeschobenen Position mit den Flächenteilen des Formraums zusammenarbeitet, wenn die Form zum Formen des Halses des Gegenstandes zu der erforderlichen Größe und Form geschlossen ist.

7. Vorrichtung nach Anspruch 6, dadurch gekennzeichnet, daß die Gleitelemente obere Flächen zum Kontakt mit dem unteren Ende eines Külbels in einer Position zwischen den Formteilen bilden, wodurch die Elemente Einrichtungen zum Positionieren des Külbels derart aufweisen, daß ein offener, unterer Endabschnitt davon über das eine Ende des Formraums hinausragt.

8. Vorrichtung nach Anspruch 6 oder 7, dadurch gekennzeichnet, daß der Dorn eine Dornanordnung mit einem Blasstift aufweist, welcher von dem Dorn nach oben vorsteht und die Einrichtung zum Einleiten von Luft in das Innere des Külbels bildet, wobei der Stift sich bis zu dem Ende des Formraums erstreckt, welches dem einen Ende gegenüberliegt und daß die Formteile Oberflächenabschnitte aufweise, die mit dem Stift zusammenwirken und mit diesem Einrichtungen zum Verschließen des oberen Endes des Külbels bilden.

9. Vorrichtung nach Anspruch 6, 7 oder 8, gekgennzeichnet durch eine Anzahl von Formeinsätzen, welche jeweils von einem der Formteil getragen werden und die Flächenabschnitte des Formraums bilden, wobei jeder Einsatz zwischen einer vorderen, normalen Formposition in Zusammenwirkung mit dem Dorn und einer zurückgezogenen Position zum Abbauen von Druck zwischen den Formteilen und dem Dorn verschiebbar ist, und daß Einrichtungen zum Bewegen der Einsätze zwischen ihren Formpositionen und ihren zurückgezogenen Positionen vorgesehen sind.

10. Vorrichtung nach Anspruch 9, dadurch gekennzeichnet, daß jeder Einsatz einen nach innen vorstehenden Kantenabschnitt aufweist, der mit dem Dorm zusammenwirkt, um von dem Külbel einen Endabschnitt abzutrennen, der sich über das einen Ende des Formraums hinaus erstreckt, wenn die Formteile geschlossen sind und die Einsätze sich in ihren vorderen Formpositionen befinden.

11. Vorrichtung nach Anspruch 9 oder 10, dadurch gekennzeichnet, daß die Formteile zwei Formhälften aufweisen, von denen jede einen der Einsätze umfaßta, daß die Einsätze in Richtung aufeinander und voneinander weg im allgemeinen radial in dem Formraum verschiebbar sind, daß die Einrichtung zur Bewegung der Einsätze zwischen ihren vorderen Positionen und ihren zurückgezogenen Positionen zusammen mit jedem Einsatz einen Betätigungsschiebar aufweisen, der in einer Richtung im allgemeinen normal zu der Radialrichtung verschiebbar ist; und daß die Betätigungseinrichtung zum Bewegen des Schiebers und einer zusammenwirkenden, geneigten Rutsche zwischen jedem Betätigungsschiebar und einem jeweiligen Einsatz so angeordnet ist, daß eine Radialbewegung des Einsatzes in Abhängigkeit von der Longitudinalbewegung des Betätigungsschiebers bewekrt wird.

**Revendications**

1. Procédé pour mouler un article creux en matière plastique comportant une partie de corps et un col relativement large à une extrémité, le procédé comprenant les stades suivants:

— l'établissement d'un moule partageable comprenant des parties de moule qui peuvent être ouvertes et fermées, lesquelles, lorsqu'elles sont fermées, définissent une cavité de moule ayant une forme appropriée à la forme exterme requise de l'article et s'étendant autour d'un axe longitudinal sensiblement vertical (X—X), ladite cavité de moule comportant, au voisinage d'une de ses extrémités, des parties de surface pour définir ledit col de l'article;

— l'ouverture desdites parties de moule;

— le positionnement, entre lesdites parties de moule, sensiblement sur ledit axe, d'une paraison tubulaire relativement étroite en matière thermoplastique à l'état apte à être moulé, ladite paraison incluant une partie d'extrémité inférieure ouverte à partir de laquelle ledit col relativement large doit être formé;

— l'établissement d'une multiplicité d'éléments entrant en contact avec la paraison;

— l'entrée en contact de ladite partie d'extrémité inférieure ouverte de la paraison avec lesdits éléments de contact avec la paraison et le déplacement de l'ensemble desdits éléments dans le sens radial vers l'extérieur par rapport audit axe longitudinal du moule (X—X), de façon à dilater la partie d'extrémité inférieure ouverte de la paraison;

— l'établissement d'un mandrin mobile entre une position rétractée et une position avancée;

— le déplacement dudit mandrin de sa position rétractée, écartée des parties de moule, à sa position avancée à l'intérieur de la paraison;

— la fermeture de l'extrémité de la paraison opposée à ladite extrémité;

— la fermeture des parties de moule, tout en maintenant lesdits éléments écartés des parties de moule;

— l'introduction d'air dans l'intérieur de la paraison pour amener la paraison à se dilater et à épouser la forme de la cavité de moule;

— le repos de la paraison pour la refroidir au moins dans un état semi-rigide dans lequel elle peut être manutentionnée et

— l'ouverture des parties de moule pour permettré l'enlèvement de l'article moulé;

ledit procédé étant caractérisé en ce qu'il est prévu un moyen mécaniquement engageable avec ladit extrémité ouverte de la paraison, ledit moyen comprenant: ladite multiplicité d'éléments de contact avec la paraison, disposés de façon à faire saillie dans ladite portion d'extrémité inférieur ouverte de la paraison sensiblement parallèlement audit axe longitudinal (X—X); une multiplicité d'organes en forme de coulisses correspondant à ladite multiplicité d'éléments de contact avec la paraison, une extrémité intérieure de chaque organe coulisse supportant l'un desdits éléments, chaque élément faisant saillie vers le haut à partir de l'organe coulisse respectif, sensiblement normalement à partir de celui-ci; une enveloppe annulaire définissant une ouverture centrale et supportant lesdits organes coulisses lors d'un mouvement de coulissement horizontal dans le sens radial par rapport à l'enveloppe; et des moyens pour déplacer les éléments, qui comprennent un anneau actuateur supporté par ladite enveloppe annulaire pour un mouvement de rotation autour d'un axe de ladite ouverture centrale définie par l'enveloppe annulaire, des moyens d'actionnement pour faire tourner ledit anneau d'un angle prédéterminé, et un moyen formant came, accouplant ledit anneau actuateur et lesdits organes coulisses et disposé de façon à produire le mouvement de coulissement radial des organes en réponse au mouvement de rotation de l'anneau, ce qui fait que la partie d'extrémité inferieure ouverte de la paraison est dilatée en déplaçant les organes coulisses dans le sens radial vers l'extérieur le long de trajets en ligne droite disposés normalement audit axe longitudinal (X—X) à partir de premières positions dans lesquelles les éléments sont disposés étroitement adjacents les uns aux autres pour permettre à une paraison d'être positionnée sur lesdits éléments jusqu'à des deuxièmes positions dans lesquelles les éléments ont été déplacés dans le sens radial vers l'extérieur pour dilater la paraison à une largeur s'approchant de la largeur finale requise pour le col de l'article;
et ledit prodécé étant caractérisé en outre en ce que le mandrin peut être déplacé au travers de l'ouverture centrale de l'enveloppe annulaire, et après dilatation de la partie d'extrémité inférieure ouverte de la paraison, est déplacé de sa position rétractée à sa position avancée, de sorte que lorsque les parties de moule sont fermées, le col de l'article est formé entre le mandrin et les parties de moule.

2. Procédé selon la revendication 1, dans lequel ledit mandrin définit une rainure annulaire externe pour former une nervure protubérante vers l'intérieur sur le col de l'article moulé et dans lequel le procédé comprend les autres stades suivants:

— rétraction du mandrin de la paraison après que la paraison a été dilatée par la pression de l'air; et
— relâchement de la pression entre lesdites parties de surface des parties de moule et le mandrin, après que la paraison a été dilatée, mais avant de retirer le mandrin, pour permettre la flexion de l'article moulé et le dégagement de la nervure moulée hors de ladite rainure dans le mandrin lorsque le mandrin est rétracté.

3. Procédé selon la revendication 1 ou 2, comprenant le stade supplémentire de la séparation, d'avec le reste de la paraison, de la partie d'extrémité inférieure ouvertue qui a été mise en contact avec lesdits éléments en formant sur lesdites parties de moule des parties de bord faisant saillie vers l'intérieur et disposées de façon à coopérer avec le mandrin pour sectionner ladite partie d'extrémité inférieure ouverte et la détacher de la paraison.

4. Procédé selon la revendication 1, 2 ou 3, dans lequel ledit stade de la fermeture de l'autre extrémité de la paraison, opposée à ladite extrémité, est exécuté en prévoyant sur ledit mandrin un élément qui s'étend jusqu'à l'extrémité de ladite cavité de moule opposée à ladite extrémité et en prévoyant sur lesdites parties de moule des parties de surface coopérant avec ledit élément existant sur le mandrin pour fermer l'autre extrémité de la paraison.

5. Procédé selon la revendication 4, dans lequel ledit élément existant sur le mandrin comprend un tube de soufflage et dans lequel ledit stade de l'introduction de l'air dans l'intérieur de la paraison est réalisé en amenant l'air à s'écouler au travers dudit tube de soufflage.

6. Appareil pour mouler des articles creux en matière plastique, dont chacun comprend une partie de corps et un col relativement large à une extrémité, l'appareil comprenant:

— un moule partageable comprenant des parties de moule pouvant se déplacer entre des positions d'ouverture et de fermeture et définissant, dans ladite position de fermeture, une cavité de moule ayant une forme appropriée à la forme externe requise de l'article et s'étendant autour d'un axe longitudinal (X—X) sensiblement vertical, ladite cavité de moule présentant des parties de surface au voisinage d'une extrémité de celle-ci pour définir ledit col de l'article, lesdites parties de moule dans ladite position d'ouverture étant capables de recevoir dans l'intervalle une paraison tubulaire relativement étroite, apte à être moulée, qui comporte une partie d'extrémité inférieure ouverte à partir de laquelle ledit col relativement large doit être formé;
— un mandrin pouvant se déplacer entre une position rétractée, écartée des parties de moule et une partie avancée à l'intérieur de la paraison;
— un moyen pour fermer l'extrémité supérieure de la paraison en face de ladite partie d'extrémité inférieure ouverte;
— un moyen pour introduire de l'air dans l'intérieur de la paraison pour amener cette dernière à se dilater, ce qui fait que la paraison épouse la forme de la cavité de moule, et
— un moyen pouvant s'adapter mécaniquement contre ladite partie d'extrémité inférieure ouverte de la paraison et adapté à dilater ladite portion d'extrémité inférieure ouverte, ledit moyen incluant une multiplicité d'éléments se plaçant en contact avec la paraison;

— ledit appareil étant caractérisé en ce que ledit moyen pouvant s'adapter mécaniquement contre ladite extrémité inférieure ouverte de la paraison comprend:

ladite multiplicité d'éléments de contact avec la paraison, disposés de façon à faire saillie à l'intérieur de ladite partie d'extrémité inférieure ouverte de la paraison, sensiblement parallèlement audit axe longitudinal (X—X); une multiplicité d'organes formant des coulisses correspondant à ladite multiplicité d'éléments s'adaptant à la paraison, une extrémité intérieure de chaque organe coulisse supportant l'un desdits éléments, chaque élément faisant saillie vers le haut, à partir de l'organe coulisse respectif, sensiblement normalement à ce dernier; une enveloppe annulaire définissant une ouverture centrale et supportant lesdits organes coulisses pour effectuer un mouvement de coulissement horizontal dans le sens radial par rapport à l'enveloppe le long de trajets en ligne droite disposés normalement audit axe longitudinal (X—X) entre des premières positions dans lesquelles les éléments sont disposés au voisinage étroit les uns des autres, pour permettre de positionner une paraison sur lesdits éléments, et des deuxièmes positions dans lesquelles les éléments ont été déplacés dans le sens radial vers l'extérieur pour dilater la paraison à une largeur se rapprochant de la largeur finale requise pour le col de l'article; et un moyen pour déplacer les éléments entre lesdites premières positions et les secondes positions, moyen qui comprend un anneau actuateur supporté par ladite enveloppe pour effectuer un mouvement de rotation autour d'un axe de ladite ouverture centrale définie par l'enveloppe annulaire, un moyen d'actionnement pour faire tourner ledit anneau d'un angle prédéterminé et un moyen à came accouplant ledit anneau actuateur et lesdits organes coulisses et disposé de façon à produire un mouvement de coulissement radial des organes en réponse au mouvement de rotation de l'anneau; ledit appareil étant encore caractérisé en ce que le mandrin peut être déplacé au travers de l'ouverture centrale de l'enveloppe annulaire par rapport auxdits éléments entre la position rétractée desdites parties de moule et la position avancée située à l'intérieur de la paraison, ledit mandrin étant conformé pour coopérer, dans la position avancée, avec lesdites parties de surface de la cavité du moule lorsque le moule est fermé pour former le col de l'article à la dimension et à la forme requises.

7. Appareil selon la revendication 6, dans lequel lesdits organes coulissants définissent des surfaces supérieures pour un contact par l'extrémité inférieure d'une paraison en position entre lesdites parties de moule, ce qui fait que lesdits organes fournissent un moyen pour positionner la paraison avec une partie d'extrémité inférieure ouverte de celle-ci qui se prolonge au-delà de ladite extrémité de la cavité de moule.

8. Appareil selon la revendication 6 ou 7, dans lequel ledit mandrin comprend un ensemble de mandrin incluant une broche de soufflage qui fait saillie vers le haut à partir dudit mandrin et définit ledit moyen pour introduire de l'aire dans l'intérieur de la paraison, ladite broche s'étendant jusqu'à l'extrémité de ladite cavité de moule à l'opposé de ladite extrémité et lesdites parties de moule incluant des parties de surface qui coopèrent avec ladite broche et qui définissent avec elle ledit moyen pour fermer l'extrémité supérieure de la paraison.

9. Appareil selon la revendication 6, 7 ou 8, comprenant en outre une multiplicité de pièces d'insertion de moule portées chacune par l'une desdites parties de moule et définissant lesdites parties de surface de la cavité du moule, chaque dite partie d'insertion pouvant se déplacer entre une position de moulage normale vers l'avant en coopération avec ledit mandrin et une position rétractée pour relâcher la pression entre lesdites parties de moule et ledit mandrin; et un moyen pour déplacer les pièces d'insertion entre leurs positions de moulage et leurs positions rétractées.

10. Appareil selon la revendication 9, dans lequel chaque pièce d'insertion inclut une partie de bord faisant saillie vers l'intérieure, qui coopère avec le mandrin pour couper la paraison et en détacher une partie d'extrémité s'étendant au-delà d'une extrémité de la cavité de moule lorsque les moule sont fermées alors que lesdites pièces d'insertion se trouvent dans leurs positions de moulage vers l'avant.

11. Appareil selon la revendication 9 ou 10, dans lequel lesdites parties de moule comprennent deux moitiés de moule, dont chacune comprend l'une desdites pièces d'insertion, lesdites pièces d'insertion étant déplaçables en se rapprochant et en s'écartant l'une de l'autre, sensiblement dans le sens radial dans la cavité du moule et dans lequel ledit moyen pour déplacer les pièces d'insertion en tre leurs positions avant et leurs positions rétractées comprend, en association avec chaque pièce d'insertion, une coulisse d'actionnement, pouvant se déplacer dans une direction sensiblement normale à ladite direction radiale; un moyen d'actionnement pour déplacer ladite coulisse et un chemin de coulisse coopérant et incliné entre chaque coulisse et une pièce d'insertion respective disposée pour produire le mouvement radial de la pièce d'insertion en réponse au mouvement longitudinal de la coulisse d'actionnement.

FIG. 1

FIG. 2

0 022 343

FIG. 3

FIG. 4

4

FIG. 5

FIG. 6